(19) Europäisches Patentamt / European Patent Office / Office européen des brevets

(11) **EP 1 775 678 A1**

(12) **EUROPEAN PATENT APPLICATION**

(43) Date of publication:
**18.04.2007 Bulletin 2007/16**

(51) Int Cl.:
***G06Q 10/00*** *(2006.01)*

(21) Application number: **05368017.9**

(22) Date of filing: **11.10.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **MURGITROYD & COMPANY**<br>**165-169 Scotland Street**<br>**Glasgow G5 8PL (GB)** | (72) Inventors:<br>• **Anderson, Angela**<br>  **06250 Mougins (FR)**<br>• **De Zeeuw, Rick**<br>  **06000 Nice (FR)**<br><br>(74) Representative: **Anderson, Angela Mary et al**<br>**MURGITROYD & COMPANY**<br>**Immeuble Atlantis**<br>**55 Allée Pierre Ziller**<br>**06560 Valbonne**<br>**Sophia Antipolis (FR)** |

(54) **A method and apparatus for managing a portfolio of assets**

(57)    A method of managing a portfolio of assets in order to take action in respect of the portfolio which comply with one or more requirement determined by a user, the method comprising the steps of:

-defining one or more requirements which align with the needs of the user;

-defining a number of criteria associated with the requirements wherein each criterion is associated with one of a plurality of indicators which are indicative of the relative importance of that criterion in respect of the requirement;

-identifying the assets in the portfolio and determining for each the criteria which are relevant to that asset and the relevant indicators for that asset in respect of each criterion;

-ordering the assets in accordance with the indicators in respect of at least two of the criteria such that the assets with common indicators in respect of both criteria are grouped together into portfolio sections thereby identifying the degree to which the assets which are aligned with the requirements;

-determining what actions are required to change in respect of the portfolio sections to meet the requirements.

Figure 13

EP 1 775 678 A1

**Description**

This invention relates to a method in apparatus for managing a portfolio of assets.

A portfolio of assets is of value to a user. The portfolio may include shares, intellectual property, bonds or any other combination of these or other assets.

If a portfolio has only one or two assets the management of the portfolio is relatively straightforward. In fact it can simply be a matter of checking the status of each asset on a regular basis and using simple computing or mental techniques to remember to do actions or makes changes to the portfolio.

However, for bigger portfolios this is not so straightforward. In fact more and more complex techniques are needed as the portfolio grows. Knowledge of what actually is in the portfolio generally diminishes as the portfolio grows. As a consequence the user is not aware of what is in the portfolio or what is of value or not.

It is well known to use databases, spreadsheets and other software packages to do some or all of the portfolio managing processes and techniques. In addition, many portfolio management tools already exist which are used by users at present.

Beyond the databases, spreadsheets and other software element of the portfolio management process other problems also exist. This is what should the actual methodology of portfolio management entail. In other words what things should be considered and what things should not be considered.

As already mentioned the user of a portfolio of assets often does not know what is in the portfolio, why it is there and what they wish to do with it. This is particularly the case when the assets are intellectual property rights such as for example patents, trademarks, designs, etc.

For a large organisation there may be many hundreds or even thousands of assets each of which is unique. For example, in the case of a number of patents they may each relate to a different technology at different stages of their development and/or be registered in different countries.

It is useful to aid understanding of the present invention to explain the process of registering an intellectual property right, such as a patent.

An invention is identified and a choice has to be made as to what to do with the invention. If a decision is made to file a patent application the patent application is prepared by a patent attorney. The patent is then filed at the patent office in accordance with a process dictated by the national law of the country in which the filing is made. That process can take anything from two to ten years.

For example, in the case of a United States patent application a patent filing is made. Within two to three years of the start of the patent filing an examination process will commence. During the examination process there may be amendments to the patent in order to find a scope of protection which is novel and inventive. The whole process in the United States can take anywhere from two to five years. The resultant patent is then issued. As will be know by the person skilled in the art for other countries the processes and time scales are similar but may differ in various manners. The result is a piece of intellectual property, an asset, which has value within the United States. The value is in terms of potential which can be realised by virtue of having a monopoly for the particular area of technology covered by the patent for a particular period of time.

After the intellectual property right has granted or issued it is kept in force be regular payment of renewal fees. In the United States this is every three and a half, seven and a half and eleven and a half years. In other countries the renewal basis is on generally an annual basis.

For a specific element of technology or a specific invention there may be a number of different patents in different countries for example, United States, Europe (including many different countries therein), Japan or any other country that is of business interest to the owner or user of the asset.

Thus, for a single invention there may be a number of patents in different countries. Further, for a particular product there may be multiple inventions in multiple countries. In addition, as technology moves on some patents become more relevant to the business interests of the user and some become less relevant. The environment of intellectual property and other portfolios of assets is a very dynamic environment. There are always changes occurring and generally the owner or user does not know what is of value at a specific time and what is not.

Accordingly, it can be seen that there is a large task to both manage and be aware of the contents of a portfolio of assets.

One object of the present invention is to provide a tool and methodology for achieving the best possible management of the portfolio of assets for each individual portfolio of assets.

According to one aspect of the present invention there is provided a method of managing a portfolio of assets in order to take actions in respect of the portfolio which comply with a user generated strategy, the method comprising the steps of:

- defining a strategy which is aligned with the needs of a user;
- defining a number of criteria associated with the strategy and which criteria are linked into groups of criteria and

wherein each criterion is associated with one of a plurality of scores which are indicative of the relative importance of that criterion in the strategy;

- identifying the assets in the portfolio and determining for each the criteria which are relevant to that asset and the relevant score for that asset in respect of each criterion;
- ordering the assets in accordance with the scores in respect of a least two of the criteria such that the assets with common scores in respect of both criteria are grouped together into portfolio sections thereby identifying the degree to which the assets which are aligned with the strategy;
- determining what actions are required in respect of the portfolio sections to change the alignment of the portfolio with respect to the strategy in a predetermined manner.

Preferably the method further comprises:

- estimating the expected cost for each asset in a following predetermined time period;
- determining the available budget for the following predetermined time period;
- comparing the expected cost and the available budget to determine a difference;
- if there is insufficient budget for the period analysing the portfolio sections to determine the degree to which the difference is attributed to each portfolio section;
- marking assets in each portfolio section which have the lowest scores in respect of one of the criterion to be cut from the portfolio in accordance with the degree to which the difference is attributed to that portfolio section, and the cost of that asset, until all the difference attributed to that portfolio section has been accounted for.

Advantageously the method includes reviewing each asset on a regular time base to change the criteria and associated scores as necessary to ensure changes in the assets' relative value are identified.

According to another aspect of the present invention there is provided a method of managing a portfolio of assets in order to align the assets with a strategy, wherein both the assets and the strategy are dynamic, the method comprising:

- identifying the strategy by defining a number of measurable criteria associated with the strategy, which criteria may be linked into groups of criteria and wherein each criterion is associated with one of a plurality of scores which are indicative of the relative importance of that criterion in the strategy;
- identifying the assets in the portfolio and determining for each the criteria which are relevant to that asset and the relevant score for that asset in respect of each criterion;
- ordering the assets in accordance with the scores in respect of a least two of the criteria such that the assets with common scores in respect of both criteria are grouped together into portfolio sections and wherein as a consequence each portfolio section has a relative importance factor with respect to the strategy;
- changing the criteria or related scores of the strategy and/or the asset with the result that the relative importance factor of each portfolio section may change.

According to yet another aspect of the present invention there is provided a method of identifying the most important assets in a portfolio of assets with respect to a predetermined set of criteria and one or more parameters, wherein the set of criteria and the one or more parameters are defined by an external influence to the portfolio, each having a relative degree of importance, the method comprising:-

- assessing each asset to determine the criteria and/or parameters which are relevant to each;
- determining the relative ranking of the asset with respect to all other assets in respect of the criteria and/or parameters,

wherein the method further comprises for each asset establishing for each asset a position in the portfolio relative to all other assets, the position being based on the degree to which the degree of importance of the criteria and the one or more parameters from the external influence matches the degree of importance of that asset in the portfolio;

- identifying the most important assets in the portfolio as those with the highest positions relative to the other assets in the portfolio.

According to yet another aspect of the present invention there is provided a method of managing a portfolio of assets comprising the steps of:-

- associating a plurality of criteria with each asset in the portfolio;

- associating with each asset a score in respect of each criterion from the plurality of criteria;
- organising the criteria into sets of criteria which are each linked in a predetermined manner;
- selecting a first set of criteria and a second set of criteria from the sets of criteria, which selected sets of criteria are the means by which a user would like to regulate the assets within the portfolio;
- organising the assets into a plurality of portfolio sections such that all assets in each portfolio section are linked by a criterion from the first set of criteria;
- ordering each asset in a given portfolio section relative to the other assets therein in accordance with the second set of criteria such that assets with the same score are grouped together; and
- ordering each portfolio section relative to each other portfolio section in accordance the score for the asset with respect to the criterion from the first set of criteria to determine a portfolio section ordering;

wherein the steps of ordering result in identifying the most important assets of the portfolio of assets; and
wherein the method further comprises using information relating to which assets are the most important to make choices about the whole portfolio without a risk of negatively impacting the most important cases at that time.

According to yet another aspect of the present invention there is provided a method for identifying in a plurality of cost generating units, a group of preferred cost generating units, comprising the steps of:

a) determining for each cost generating unit a first identifier, relating to the relative importance of each unit compared to the other units in the plurality,

b) determining for each cost generating unit a second identifier, relating to the costs generated by each unit in a predetermined time-frame,

c) determining a budget, for the expenses on the cost generating units in the plurality, wherein the group of preferred cost generating units is identified by:

d) using the first identifiers to select the most relevant cost generating unit in the plurality,

e) using the second identifier of the unit selected in step d) to add the costs for the unit to a total,

f) comparing the total with the budget,

g) if in step f) the total is not exceeding the budget, adding the unit selected in step d) to the group of preferred cost generating units and removing said unit from the plurality, and

h) repeating the steps d), e), f) and g) until in step f) the total equals or exceeds the budget.
Advantageously the method comprises the steps of:

i) determining families, each containing one or more of the cost generating units of the plurality,

j) determining for each cost generating unit a third identifier, relating to the family of which the cost generating unit is a member,

k) determining a budget, for the expenses on the cost generating units in each of the families,
wherein the group of preferred cost generating units is identified by:

l) using the first and third identifiers to select the most relevant cost generating unit in the plurality for a first family,

m) using the second identifier of the unit selected in step l) to add the costs for the unit to a total for the respective family,

n) comparing the total of the family with the budget of said family,

o) if in step n) the total for family is not exceeding the budget for the family, adding the unit selected in step l) to the group of preferred cost generating units and removing said unit from the plurality,

p) repeating the steps l), m), n), o) en p) until in step o) the total for the family equals or exceeds the budget, and

r) repeating the second and further families.

According to yet another aspect of the present invention there is provided a method to manage assets comprising:

defining a universe of assets represented by data sets;
providing an asset management paradigm comprising one or more instruction sets to perform one or more processes on the one or more data sets; and
reporting the results of the one or more processes according to one or more selected reporting protocols.

Reference will now be made by way of example to the accompanying drawings in which:

Figure 1 is a diagram identifying the different considerations which form the basis of a portfolio management task;
Figure 2 is a table showing the main considerations in portfolio management;
Figure 3 is a questionnaire to aid in defining the strategy of a given owner of a portfolio of assets;
Figure 4 is a flow chart explaining a typical process for a patent application and illustrating the times at which the portfolio is reviewed;
Figure 5a to 5f show parts of a new invention form for capturing information relating to a new invention which is relevant to portfolio planning and management;

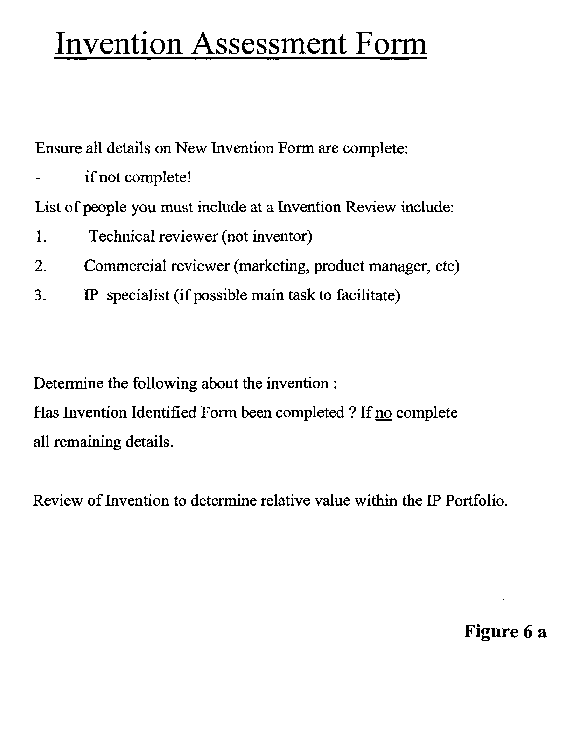

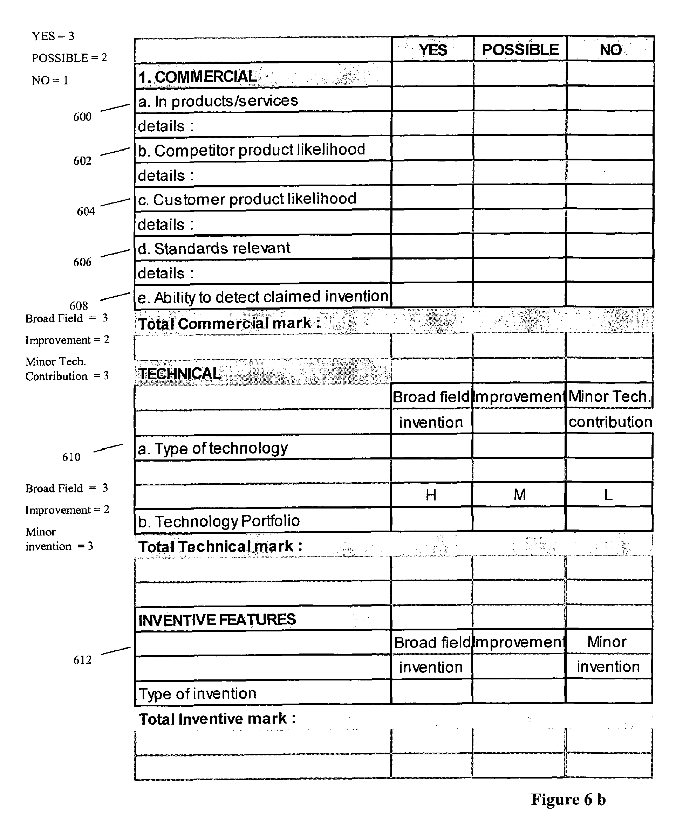

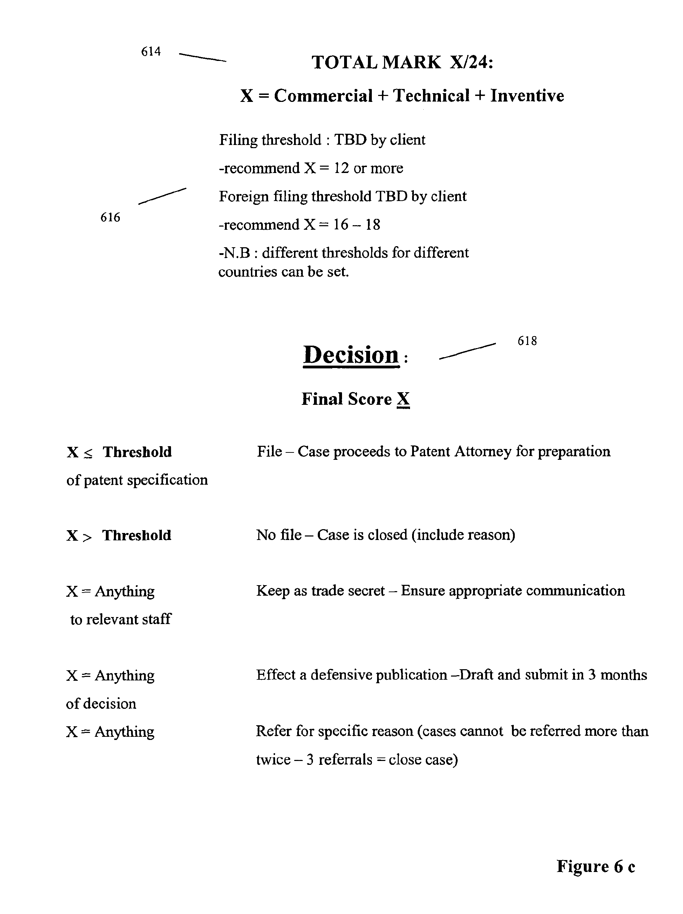

Figures 6a to 6c shows parts of an invention review form for capturing value information for a new invention;
Figure 7 is a table for showing a typical case profile with an estimate of cost per country per year;
Figure 8 is a diagrammatic representation of the cases in a portfolio and the portfolio management line which is determined to manage the portfolio;
Figure 9 is a diagrammatic representation of the costs for a portfolio and the portfolio management line which is determined to manage the portfolio;
Figure 10 is a representation of a screen shot for the portfolio management tool of the present invention.
Figure 11 is a block diagram of a system for use in performing asset portfolio management;
Figure 12 is a block diagram of another system for use in performing asset portfolio management; and
Figure 13 is a flow chart showing the method of the invention for an example portfolio.

The following description deals with the management of a portfolio of Patents. It will be appreciated that the same techniques apply for a trademark portfolio although certain details may be different. In addition the method and tool could also be used for any other type of portfolio of assets, whatever the nature.

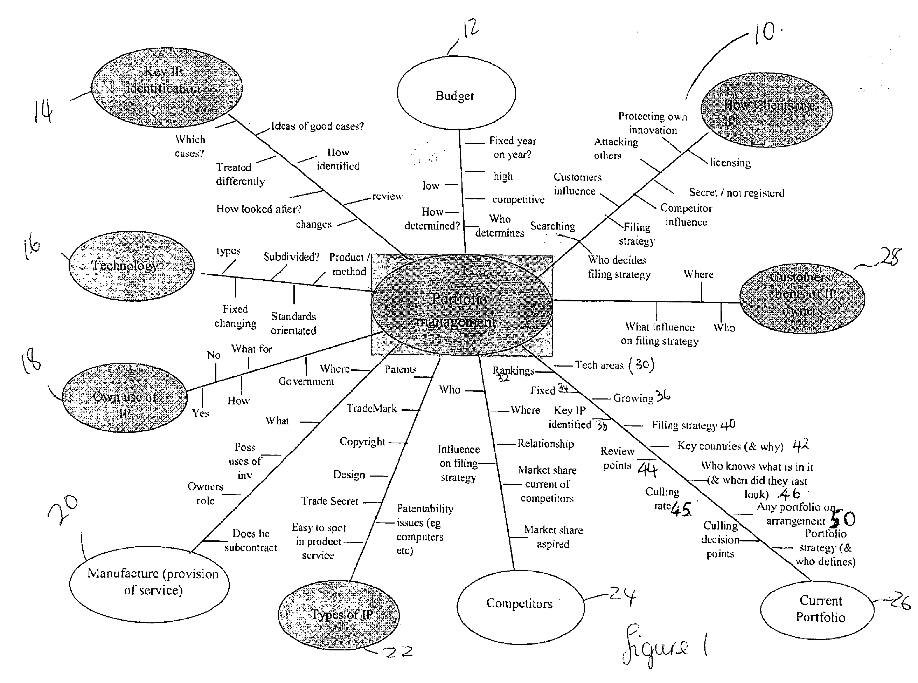

Figure 1 which shows a mind map identifies an example of the types of consideration that are necessary when considering what is important about patent portfolio management. This is not definitive or necessarily complete, but merely an example of the considerations to be made. The main areas for consideration are shown at the edges of the spokes 110. These are:

- budget 112,
- key IP identification 114,
- technology 116,
- how the owner intends to use the IP 118;
- whether there is to be any manufacture or provisions of service and if so what 120;
- what types of IP are in the portfolio 122;
- who are the competitors and what influence do they have on the IP portfolio 124;
- the current portfolio 126; and
- who are the competitors and what influence do they have on the IP portfolio 128.

For each area there are a number of considerations that may be made. These are shown on each spoke 110 of each main area for consideration. For example looking at the current portfolio (126) there are the following (non-comprehensive) observations or questions:

- are any technology fields identified 130;
- are there any rankings of any cases or technology fields 132;
- is the portfolio fixed in size 134;
- is the portfolio growing 136;
- is the key IP identified 138;
- what is the filing strategy 140;
- what are the key countries and why 142;
- when are the review points 144;

- who knows what is in the portfolio (and when did they last look) 146;
- culling rate 148;
- has any portfolio management been started 150;
- when are the culling decision points 152;
- who defines the strategy for the portfolio and how 154.

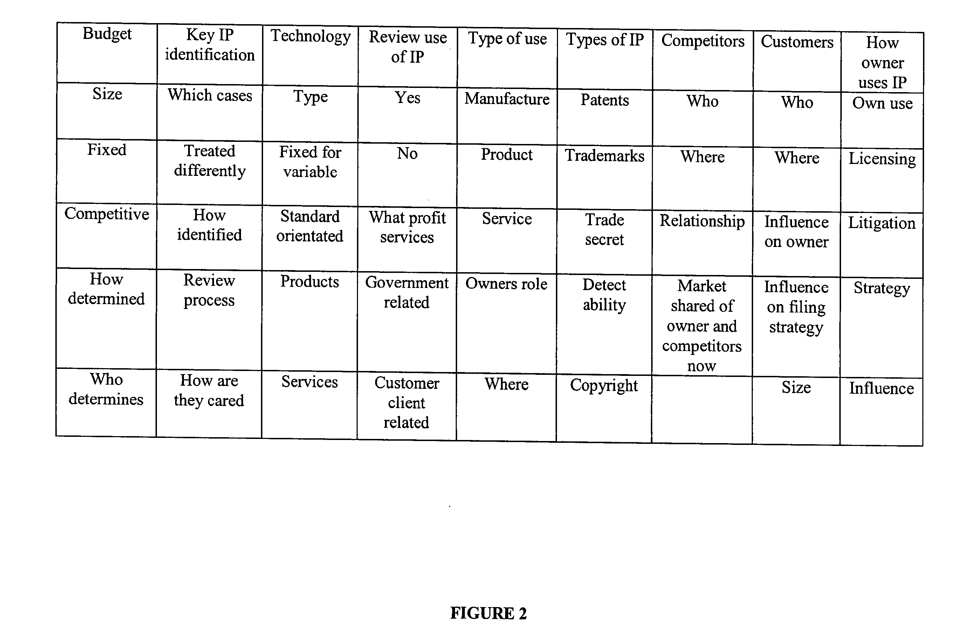

For the other main areas there are similar observations and questions the table in Figure 2 identifies five of the main observation and questions for each area, whilst figure 1 gives other examples and further examples will depend on the type of portfolio and the use thereof.

The conceptual plan represented in figure 1 is intended to give an indication of the extent of the variables which must be managed and determined in order to carry out portfolio management. The following section of the description describes a methodology for carrying out at least some of this. In the examples shown there may be much variation depending on the portfolio, the owner or user of the portfolio and what the portfolio is to be used for.

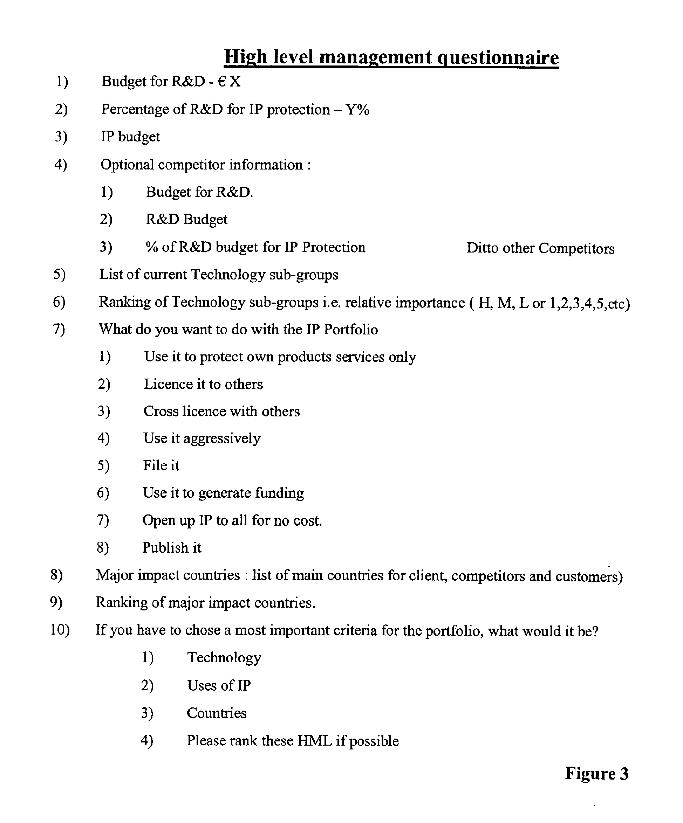

Figure 3 shows a high level management questionnaire which is to be completed by a senior member of staff in a company which owns the portfolio. The person completing the form is intended to be someone who has a good knowledge of the company, the company budget and the business strategy of the company. This type of information is particularly important in defining an IP strategy for the company. It is believed to be important that there is synergy between the business and IP strategies of an organisation. If there is no synergy then it is likely that the IP strategy and thus the IP portfolio will not be optimal for the company.

The answers to the questions shown in figure 3 will be used to manage the portfolio and to set the framework in which the portfolio is managed. The first four questions (1-4) concern IP budget requirements and are used to determine an optimal budget for spending on IP protection. It is suggested that a percentage of the Research and Development budget is a good example of a metric to define IP budget, but others can be used. It is advantageous to determine whether the budget position is aligned or equivalent with that of the companies' major competitors. This alignment or equivalence is subjective and is intended to ensure that the company IP portfolio can grow, stay the same or shrink, relative to that of the competitors as required by the business strategy.

Questions 5 and 6 relate to the identification of technology. The company as a whole works in a specific technology area. For non technical portfolios clearly equivalent terms may be used, for example service areas, product areas, licensing areas etc.

The main area of interest of the company, in this case the technology, can be sub-divided into a number of technology sub-groups. In order to explain this clearly an example is presented for a company carrying our research and development in washing machines. For this type of technology the following technology sub-groups or sub portfolios may be used.

- heating elements;
- materials;
- control systems and circuits;
- mechanical elements; and
- new product development.

The questionnaire asks for identification of these sub-groups and requests for a relative ranking for each of the sub-groups with the others. For example the rankings may be as follows:

| 1st Type ranking | Sub-portfolio | 2nd Type ranking |
| --- | --- | --- |
| 1 | Control Systems & Circuit | H |
| 1 | New products | H |
| 3 | Material | M |
| 4 | Heating Elements | M |
| 5 | Mechanical Elements | L |

The rankings are 1-5 where l is the most important or could by H, M, and L where H means high, M means medium and L means low.

This information is to be use to define the frame work which is populated with intellectual property (as will be described below). This framework is very important for the overall management of the portfolio. For example if a patent or application relates to a heating element it will be put into the heating element sub-group, if it relates to a new method of controlling a wading machine it may be placed in the control systems sub-group.

There will be cases which might be in more that one sub-group, if this is the case it is advisable to select one only as duplicate entries will mean the later functions of the portfolio management tool are compromised.

The questionnaire then seeks to determine what use intellectual property has within the company. For example the company wants to

- just use the IP themselves
- licence the IP to others
- prevent from using the IP by litigation
- do nothing
- use it to generate finding
- give it away

It is important to understand this metric as it will have an influence on what cases might be filed or not and in what countries. For example it the major focus for IP is own use of the IP it may not be necessary to file the patents in too many countries. If the focus is litigation the filing strategy should reflect this and if the company is interested in licensing, the filings should be in the major markets of the competitors.

Questions 8 and 9 of the questionnaire seek to understand the geographical factors which impact the business and intellectual property strategies. By ranking the countries it is possible to determine the most important countries and then make choices for the portfolio in respect of this.

In the process of portfolio management in is not uncommon that a difficult decision needs to be made. For example if there is too many cases in the portfolio and a decision needs to be made to abandon one or more cases. If there are many cases ranked by different criteria, i.e. technology, intended use, country etc. it is useful to know which of the criteria is the most important. Question 10 attempts to identify this by ranking the criteria in order of importance for the company.

As previously indicated the questionnaire may be different for different areas. For example for a trademark portfolio the questions will relate to marks or products rather than technologies and the intended uses may be different but the general principle of portfolio management remains the same.

For a portfolio of stocks the questions may relate to risk and degree of risk that the owner wants to take, the type or markets and the requirements of the owner relating the time scales, expected or required growth of investment etc.

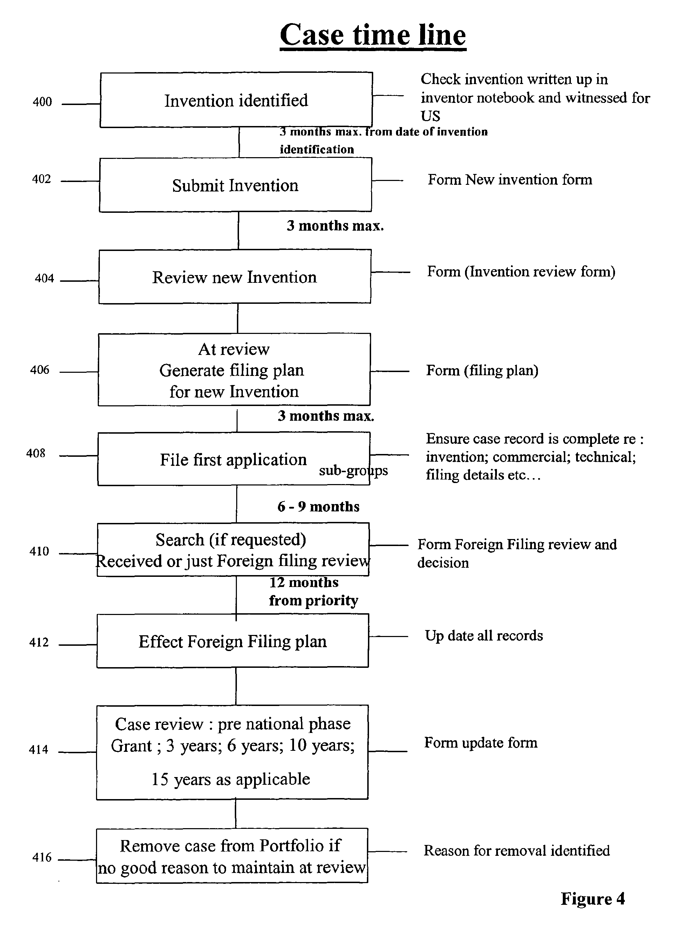

Referring now to figure 4 a case time line is shown which shows the basic stages of a typical new invention for which protection may be sought. It also shows the information required and the reviews that are made throughout the life of the invention and corresponding patent or patent application.

An invention is identified 400 and checks should be made to ensure that the invention has been written up in an inventor notebook and is witnessed, as required by US law if necessary.

If possible within a limited time frame (for example 3 months) the invention should be identified to the person in the organisation who has responsibility to IP matters 402. Ideally a new invention form is used and will be described in greater detail below. Within a further limited time frame (for example less than 3 months) the invention should be reviewed 404, to determine what should happen to it. The review process will be described in greater detail below. If the outcome of the review is that a patent should be filed a filing plan is prepared 406 and then a patent application is prepared and filed 408.

In many countries it is possible to make a request for a search at the point of first filing and in these circumstances there will be a search report issued 410. With the search report it will be possible to determine whether there is a reasonable chance of a resultant patent. With this information it is possible to make a decision of what foreign filings are reasonable and effect the foreign filing plan as either previously set out in the filing plan or to amend it as required.

After filing the required applications, they will proceed through the relevant patent offices at different rates and probably with different results or ultimate scopes of protection.

During the life or the patent or patent application a review is made at points in time 414 where decisions relating to the family of cases have to be made. For example, if a PCT application has been filed at 30 or 31 month the application enters into the national phase and the application has to be filed in each designated country. This is an expensive phase of the process and is thus a good review point if the invention covered by this application has been superseded, or is now no longer or interest to the company. If this is so it may be an appropriate point to remove this case from the portfolio and let the patent applications lapse or become abandoned 416.

At the review it may be determined that actually the case has become very important and constitutes a key piece of IP for the company. Accordingly the ranking and/or importance of the case is adjusted which ensures that any portfolio decisions do not negatively impact this case.

The review of cases may take place at any appropriate time for example 3 years, 6 years, 10 years, 15 years from the first filing date of the first application.

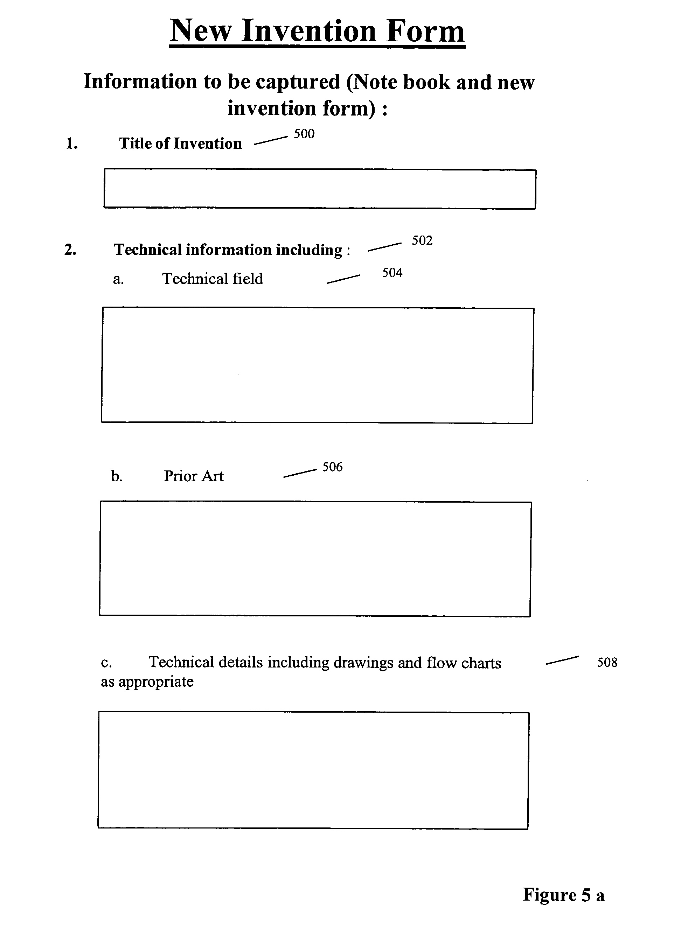

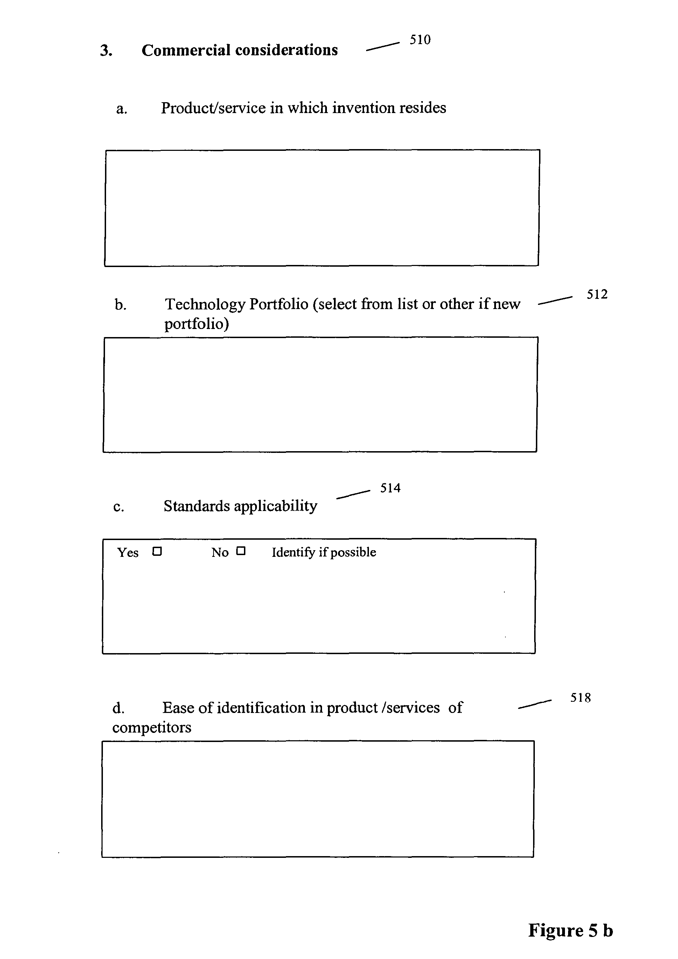

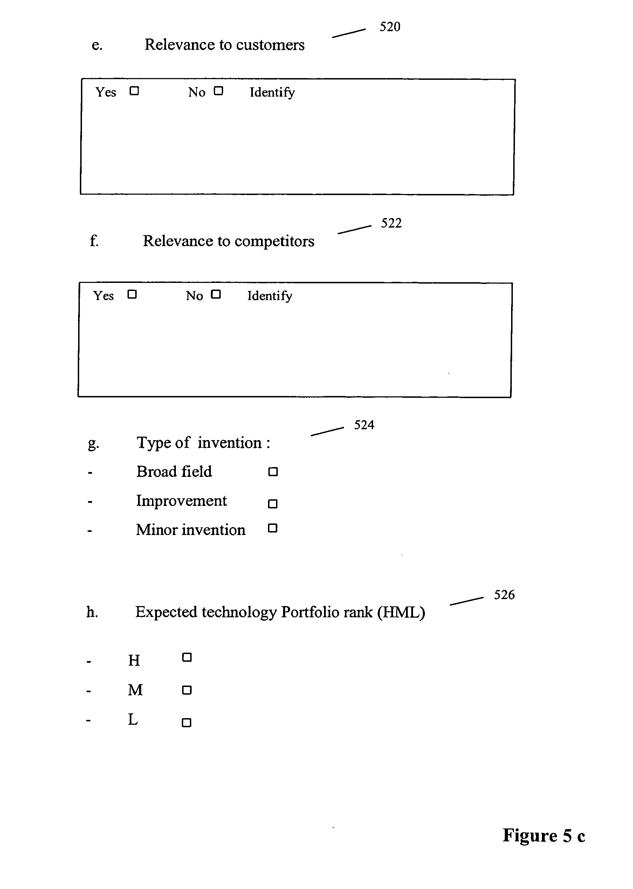

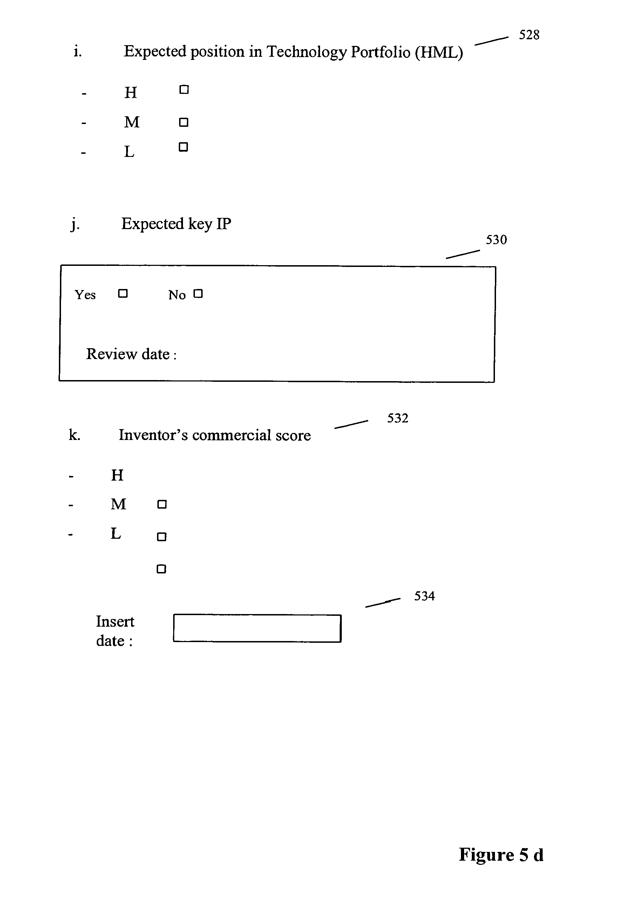

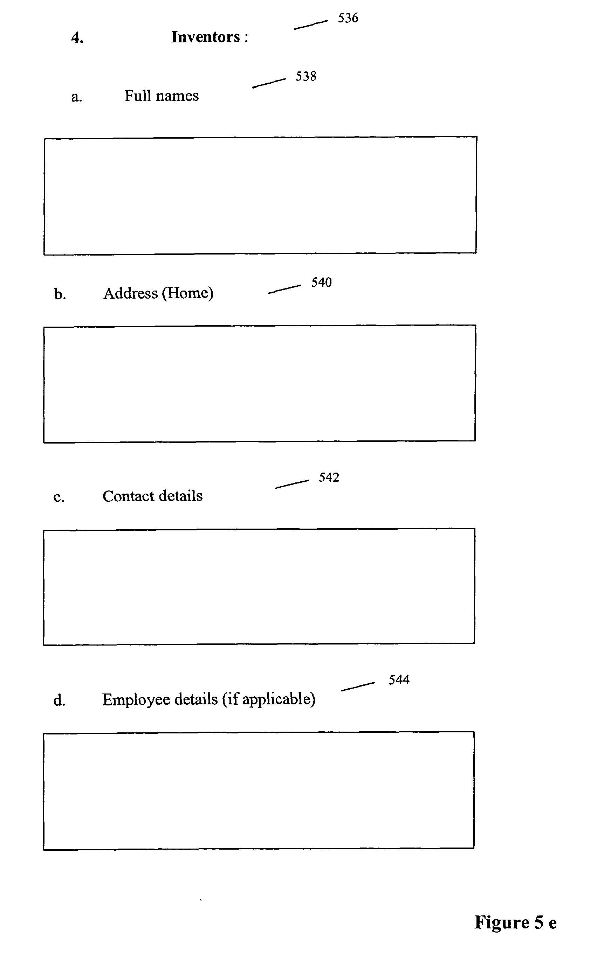

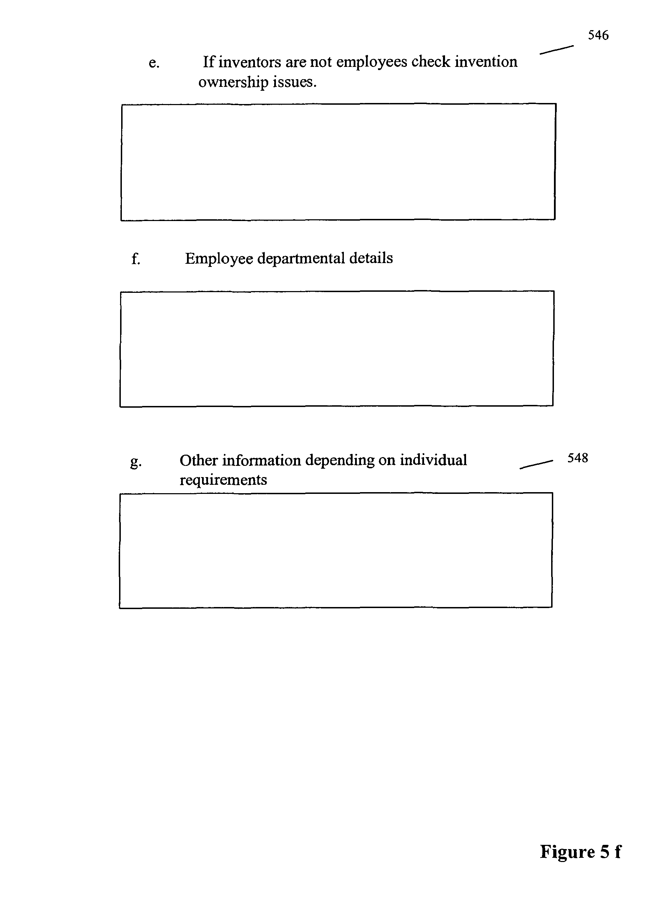

Referring now to figure 5, a form for capturing information relating to a new invention is shown. The form is shown by way of example only. The type of information which is captures is listed below:

- Invention title (500)

- Technical information (including) (502)
Technical field (504)
Prior Art information (506)
Full technical description of the invention (508)
- Commercial considerations (including) (510)
Product/Service in which the invention resides (512)
Technology portfolio (514)
Standards applicability (516)
Ease of identification in products and services of others (518)
Relevance to customer (520)
Relevance to competitor (522)
Type or invention (524)
E.g. Broad field;
Improvement; or
Minor step
- Expected technology portfolio ranking as suggested by the inventor (H, M, L) (526)
- Expected position in technology portfolio (H, M, L) (532)
- Date (534)
- Inventor details (including for the or each) (536)
Name 538
Address 440
Contact details 542
Employee details (if applicable) 544
- Are the inventors employees? If not are there any ownership issues to be resolved 546
- Any other relevant details? 548

Ideally this type or information will be stored in a database and some of the information may be used in a review of the invention which is described in more detail below. In addition some of the data may be used in the portfolio management processes.

The term technology or sub- portfolio is now described in more detail. As there are often many assets in a portfolio it is generally easier to manage the portfolio if the assets are split up and categorized in some manner. For this application the manner selected is by technology and each asset or case of a specific technology is nominally grouped with all other assets relating to the same technology. The technology portfolios will then include all the assets relating to that technology.

Having categorised the asset in this way it is possible to rank or order the asset within the technology portfolio and to rank or order the technology portfolios relative to one another. This gives a position for each asset relative to others in a least two manners (position in the portfolio and relative position of the portfolio with the others). Thus, if a cut has to be made to the total portfolio, the categorisation and ranking information can be used to do this. The other criteria relating to each case influences the relative position of each case in its respective sub-portfolio. If changes are made to the importance of these criteria and/or the relative ranking of the criteria the position of a given cases can change within the overall portfolio.

In the example shown, i.e. for patents, the portfolios may be technologies; however for different assets or business needs the portfolios may be product, licensing areas, countries or any other parameter by which ordering and categorisation is achieved.

For example for a trademark portfolio, the sub-portfolios or categories may be area of current use of a trademark. For example, the marks used by a company for its white goods may be categorised together or maybe countries is an important categorisation characteristic. Also future or past use may be categorised which enable a degree of management or order.

The next phase of the process is described with reference to figure 5 and is the assessment of a potential invention.

The assessment should be conducted as soon as possible after the conception of the invention as timing is always important for patents. The assessment is preferably conducted by a technical expert (not the inventor) a commercial expert and an IP specialist. As record keeping is important a confirmation check is made that all fields in the new invention form have been completed, the remainder of the assessment is in relation to the value of the invention with respect to all others within the portfolio.

The commercial considerations are generally the most important and include the following:-

- the products or services in which the invention may be found (including details thereof) (600);

- the likelihood of the invention being in competitor products/services (including details) (602);
- the likelihood of the invention being in customer products/services (including details) (604);
- standards relevance (including details) (606);
- ability to detect the invention (608);
- any other appropriate question dependant on the asset, the purpose or whatever is relevant to the circumstances.

For each question or enquiry above the answer could be "yes", "no" or "possible". If "yes" then this case is more important than "possible" and then obviously "no". Accordingly, a score may be given for each answer. In this example if the answer is "yes", 3 points are given, if "possible", 2 points and if "no" only 1 point. Other alternate means of evaluation are equally valid.

In addition to the commercial considerations technical (610) and inventive assessment (612) are made. For example a broad technology may get 3 points, improvement technology 2 points and minor technical improvement 1 point. Similarly for inventive contribution: a broad field invention may get 3 points, an improvement 2 points and a minor invention 1 point.

The total mark for each section (commercial; technical; inventive) is calculated as is the overall mark for all sections (614). The overall mark or score is merely an indicator of potential value and is a useful metric for determining the relative values of a case to the others in the portfolio or the sub portfolios.

Clearly the mark or score is one metric but any other appropriate means may also be used. The total mark may also be used as part of a decision making tool. For example, a threshold may be set for determining whether or not a patent should be filed. For example if the total maximum score is 24 the filing threshold may be 12 and the foreign filing threshold may be between 16 and 18 (see 616). In fact different thresholds can be set for filing in different countries.

It is important after the review that a decision (618) is made. The decision to file a patent or not may be based on the threshold as previously discussed. Other decisions may however be appropriate for example the company may wish to keep the invention as a trade secret or as an alternative may wish to make a defensive publication.

In certain cases it may not be possible to make a decision or even to complete the assessment. If this is the case it may be necessary to refer the invention to the inventor to ask questions or ask for further information. If this is the case the invention may be "referred" for a specific reason.

The assessment described above is one review, however in order to keep the whole portfolio in the "best of health" it may be necessary for other assessments to be carried out. For example, this may be at regular times through the life of the patent and/or points in the life of the invention or patent where decisions have to be made (e.g. entry of the national phase of the PCT).

In addition, it should be noted that the assessment may measure and record different information at different points in the life of the invention and patent. For example for a granted case, these may be criteria relating to licensing, potential litigation targets, infringement generally, which products include the patented invention, etc.

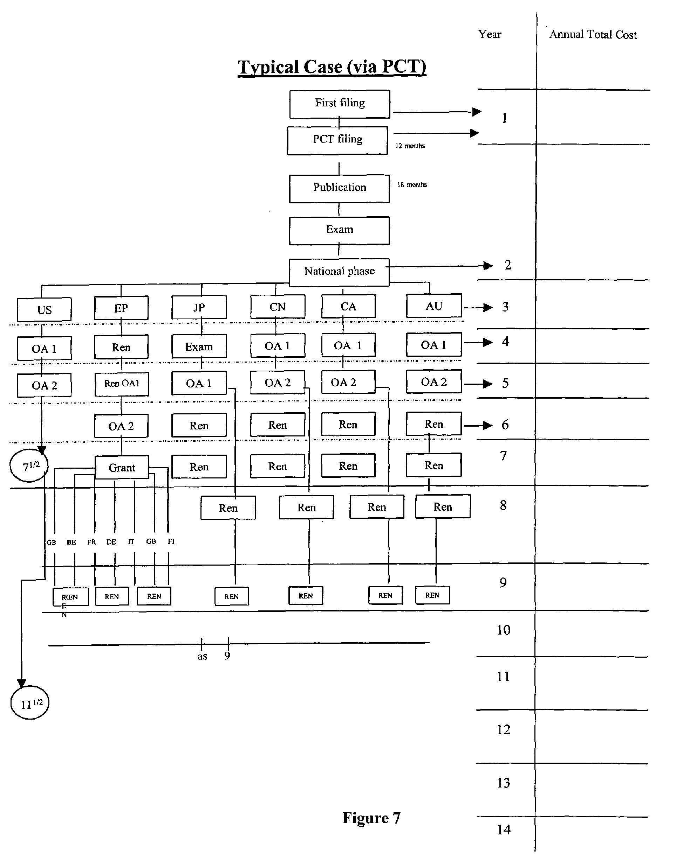

Another important aspect of patent portfolio management is to be able to estimate costs for maintaining the portfolio and if necessary comparing this with budget availability. Figure 7 is a flow chart for a typical invention which has been filed first as a national application, then as a PCT application within the first year. The chart gives an example of the types of thing that may occur during each year of life of the patent application. The terms in the flow chart should be interpreted as follows:-

US = United States Patent filing (from PCT)
EP = European filing (from a PCT)
JP = Japanese filing (from a PCT)
CN = Chinese filing (from a PCT)
CA = Canadian filing (from a PCT)
AU = Australian filing (from a PCT)
GB = British Patent grant (from EP/PCT)
BE = Belgian Patent grant (from EP/PCT)
FR = French Patent grant (from EP/PCT)
DE = German Patent grant (from EP/PCT)
IT = Italian Patent grant (from EP/PCT)
FI = Finnish Patent grant (from EP/PCT)
Ren = Renewal due (generally annual)
OA1 = first official action (generally response)
OA2 = second official action (generally response)
Exam = Request for examination.

Clearly the chart could include other countries and other actions depending on circumstances, for example if an opposition occurs. In addition, typical case may be of a different profile, for example without a PCT phase.

In the present invention the flow chart of figure 7 is the first layer of a cost estimates database. In a computer driven version of the tool a user may move the cursor over the relevant stage of the case profile and an estimate of the cost for that year in that country is displayed. In addition, this cost per year information may be stored in a simpler look-up table so that the content can be used for budget and cost analysis of the portfolio. This element of the portfolio management tool will be described in greater detail below.

As estimating costs in any field is very difficult there may be means which can be used to "weight" the costs. For example, the technology of the invention is highly complex and thus is likely to be more costly than the average estimate stored in the chart or the look-up table. The weighting may also be used for changes to the average number of pages of the patent application or any other factors which might influence costs, such as exchange rates.

As previously indicated the cost and the budget analysis of a portfolio are a complex and multifaceted process.

The following section of the invention shows a method of automatically comparing cost budgets and relative importance of the intellectual property to the user in order to determine how to manage the portfolio. As previously indicated each case in a portfolio is generally in a sub portfolio.

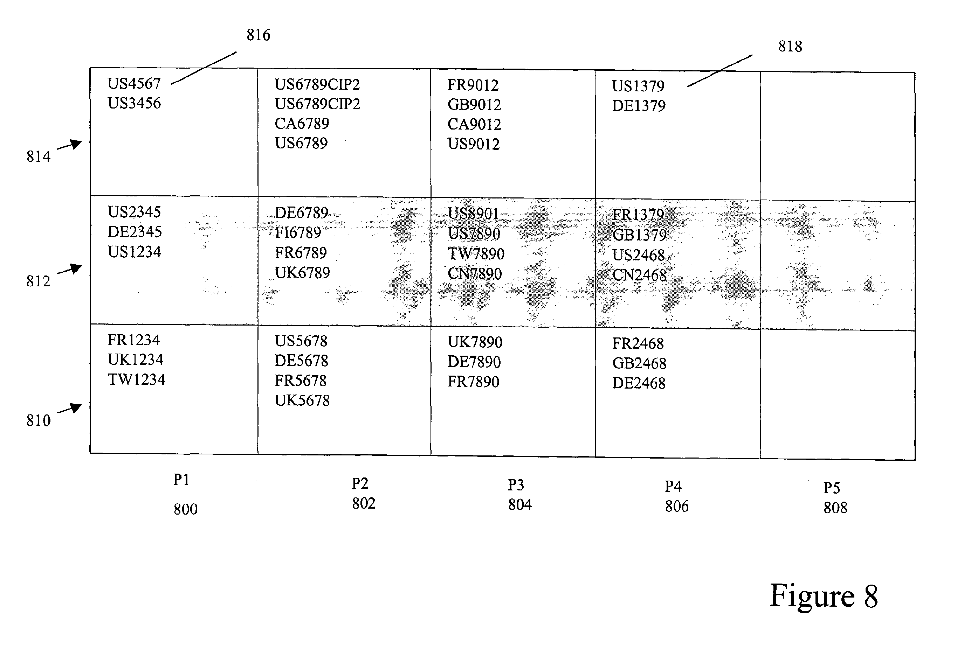

Figure 8 shows five sub portfolios (P1-P5) 800, 802, 804, 806 and 808. P1 is the least important of the file sub portfolios and P4 is the most important of the current portfolios for the user. P5 is a new portfolio which does not yet include any cases.

In each portfolio there are a number of patent cases listed these are shown by a country indicator and a four digit reference numbers. All the cases with the same four digit reference number relate to the same "family" of patents. In other, words relate to the same invention but in different countries. In addition, each portfolio is divided into three sections 810, 812 and 814. The section 810 is the least important of the sections and section 814 is the most important. There may be any number of sections, but the relative importance of each is known.

The review and high level management questionnaire answers together put the cases into an area of the portfolio (e.g. 816, 818 and 820). Area 816 includes the most important cases in the least important sub portfolio. Area 718 includes the most important cases in the most important sub portfolio (in fact the most important cases in the whole portfolio. Area 820 includes the least important cases in the least important sub-portfolio (and the least important cases in the whole portfolio). This is important to know in the event that any cuts need to be made to the portfolio as will be described in greater detail below.

One of the main features of the invention is that the position of each patent case is known with respect to two or more criteria which are important to the owner of the asset. As previously indicated these criteria are specific to the user and can be selected from any of the criteria identified in the high level questionnaire, the invention review or subsequent reviews. Also these criteria can be easily changed by the user if required. If any criteria are changed the portfolio may be reordered. This will enable the user to identify cases which meet certain specified criteria. For example, the user is looking for cases which can be used to license a specific competitor. By re-ordering the cases in this way the tool gives an easy means for the user to "see" cases which match his or her search and to make choices of courses of actions.

Another important feature of the invention is that for a given case there are a large number of facets and criteria stored in relationship to each case. Each of these criteria or facets has a number of alternatives, each of which have a degree of relative importance. In addition, the relative importance of one criterion relative to another may be different or over time the relative importance of a criterion may also change.

This is best described with reference to an example: a user has a portfolio with three sub-portfolios. The sub-portfolios all relate to a TV remote control, the first sub-portfolio is the IR elements and communications element; the second is the chips and software; and the third relates to the physical features of the remote controller. At a first time period the user of the portfolio has a business manufacturing TV remote controls and thus all of the sub-portfolios are relatively similar in importance and those cases in each sub-portfolio relatively important dependency on whether they are in the manufactured controllers or not.

After a couple of years the user decides that manufacturing is not very profitable and that he will make more money licensing his IR elements into multiple market places, as the patents in this space are particularly strong. In this situation the IR elements and communication elements sub-portfolio now becomes the most important of these sub-portfolios and within that portfolio all the IR elements become the most important. The portfolio is then manipulated to ensure that IR elements find themselves in area 818 of figure 8.

Thus it can be seen that the content of the portfolio can be manipulated by re-ranking everything in dependence on changes of business emphases and strategies. This is an important element of the invention.

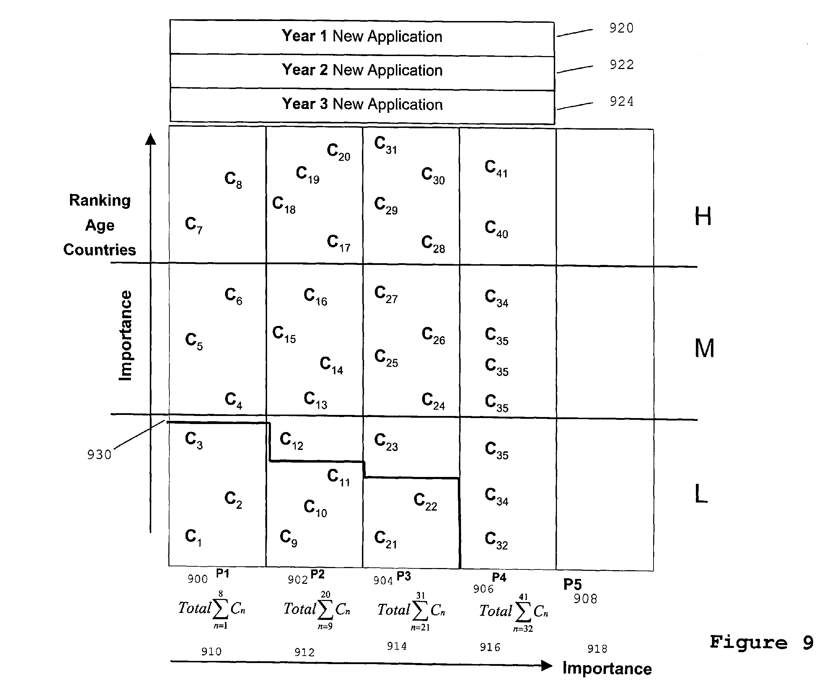

Referring now to figure 9, an important factor for anyone who is in charge of a portfolio of assets is how much does the portfolio cost and how much is there in the budget. The chart in figure 9 is part of a budget and cost calculating module and here shows a portfolio which is equivalent to figure 8 in respect of sub-portfolios P1-P5 (900, 902, 904, 906 and 908). In each sub-portfolio there are a number of costs C1, C2, C3... to C41. Each of these costs corresponds to the case in figure 8 which is in the equivalent position. For example C1 relates to TW1234, C2 to GB1234 etc. The costs C1 - C41 are generated as an estimate of cost for the given case, in the country it is filed and at the age it is. For example TW1234 and GB1234 are both same ages (as are all the other country 1234 cases) e.g. they are both 4 years old. The cost of the TW case for year 4 can be estimated from a look up table, (see figure 7 and associated description) data base or manually entered if required. Similarly the cost for the GB case for year 4 is determined. The values of C1 and C2 are thus estimated and stored in a memory. A similar process is carried out for all cases in figure to generate the relevant costs. Once all the costs are generated and stored in the memory they can be used to determine if the expected costs for the current year are likely to conform with the budget or not. The total cost for each sub-portfolio is determined (910, 912, 914, 916 and 918) by summing up all the costs in each column.

In addition in figure 9 an area is shown for cases which are in their first second and third years (920, 922, and 924). These are specifically separated out, as they may need different treatment than all the other cases. This is due to the fact that in the first three years, decisions may not be based on the same criteria as the rest of the portfolio and it is unlikely that any of these cases will need to be killed except for a specific reason. An example of such a reason is a particularly relevant prior art search for a case which is about to enter the costly national phase of the PCT process.

It is possible as with the other parts of the portfolio to estimate the costs for all the new applications and a total cost for each year's worth of new applications for example costs NC, NC2 and NC3 for cases in years 1, 2 and 3 respectively. After the 3rd year all cases will revert to their appropriate sub-portfolio and be treated accordingly. Similarly each year there may be a need to file new filings. In fact there may be a specific requirement of numbers for these. This will be determined by the business strategy. There will be a cost associated with this activity NF.

In addition it may also be possible to predict costs in other ways. For example if a user has a patent data base with due dates entered it may be possible to more accurately predict the costs for say the next three months. This can be done by referring to the forthcoming due dates and determining which types of action are to occur on which cases and using this information to generate an estimate.

It may also be possible to use invoices for a preceding time periods to either confirm estimate of costs generated in other ways or to predict forthcoming similar cost. In the latter case this information may assist in resolving any differences between estimates and actual costs and thus fine tune the estimates for future period. This will ensure that the budget is used in the best possible way. In this orally other way monthly estimates of cost can be determined and where possible an attempt can be made to pay for Patent services on a monthly basis to avoid peaks and troughs in the cost profile.

In order for there to be effective management of the portfolio it is important that the costs required for a given year are known (or reasonably estimated) either to define the required budget or ensure that the budget is not exceeded. The following algorithm indicates how the calculation is carried out by the portfolio management tool. This algorithm forms part of the costing module of the tool.

In the example where a budget is known and defined in advance of the start of the given year the algorithm works as follows:-

$$\texttt{Budget = Z}$$

For each case the following information is known:-

- filing country and filing year from which we derive a cost C (see figure 7 for example)
- technology portfolio (P1, P2, P3, P4 etc.) including an importance indicator
- ranking (H, M, L) of the case with respect to one or more criteria within the portfolio.

As previously indicated for the whole portfolio there may be some costs which may not be associated with the portfolio. For example these may include:-

- new filing costs for specific years = NF
- costs for new cases = NC = NC1+NC2+NC3

The total costs for all cases in the sub-portfolio (X) are determined as follows:-

- costs for cases pending or granted

$$X = \sum_{n=1}^{n=N} C_n$$

Where N is the total number of cases in the portfolio and $C_n$ is the cost per case.

As all the cost are estimates it is probably necessary to include an error estimate E of $\pm$ 5% of the total budget Z. This error estimate way also be used to add (or remove) a weighting factor to or from the estimate if for example the portfolio relates to a particularly difficult area of technology.

Thus with the values already determined it is possible to determine the total portfolio costs Y, such that:-

$$Y = NF + NC + \left( \sum_{n=1}^{n=N} C_n \right) + E$$

Therefore, budget available for pending and granted cases (i.e. the cases in the sub-portfolios A is given by:

$$A = Z - (NF + NC + E)$$

If the available budget for the cases in the sub-portfolios A is greater than or equal to the total costs for all pending and granted cases, i.e. if:

$$\sum_{n=1}^{n=N} C_n \le A$$

Then it will not be necessary to make any changes for budgetary reasons and any changes to the portfolio will only be made if the user wishes to drop a case for a specific reason.

However, if A is less than X i.e. if:

$$\sum_{n=1}^{n=N} C_n > A$$

Then it will be necessary to determine the difference D between the available budget A and the total cost. In other words

$$D = \left| A - X \right|$$

or

$$D = \left| X - \sum_{n=1}^{n=N} C_n \right|$$

In order for the budget to be met, it is necessary to determine how the difference should be distributed between each of the sub-portfolios. This is because not all the sub-portfolios are of equal importance then it may be necessary to distribute the difference equally rather than un-equally. However in the present example as previously indicated each portfolio P1-P4 has a relative importance when compared to the others. P1 is the least important, and then P2, then P3 and finally P4 is the most important. It might be reasonable then that the user does not want to lose any cases from P4 and thus does not seek to find any of the difference D from this portfolio. Accordingly, an example of how the difference D may be distributed is as follows:-

- Portfolio P1 %D = 50%
- Portfolio P2 %D = 30%
- Portfolio P3 %D = 20%
- Portfolio P4 %D = 0%

The percentages indicate the amount of the difference attributed to each portfolio. The routine carries out an iterative process on each sub-portfolio. For example for P1, starting with the least important cases in the sub-portfolio (TW1234; C1) and then progressively each next important case (HK1234; C2 etc) the costs are added up. This is continued until the cost of P1 which equals 50% of D is reached. This may also be expressed as:-

For P1 Determine "a" from: $50\%D = \sum_{n=1}^{n=a} C_n$

For P2 Determine "b" from: $30\%D = \sum_{n=1}^{n=b} C_n$

For P3 Determine "c" from: $20\%D = \sum_{n=1}^{n=c} C_n$

For P4 % D = 0

Where "a" is the number of cases from the "bottom" of the first sub-portfolio needed to satisfy the fist equation, similarly for "b" and "c" for the second and third equations respectively.

The term bottom is here intended to mean the cases that are least important in the portfolio, as previously explained. Figuratively these are at the bottom but may not be in any other respects.

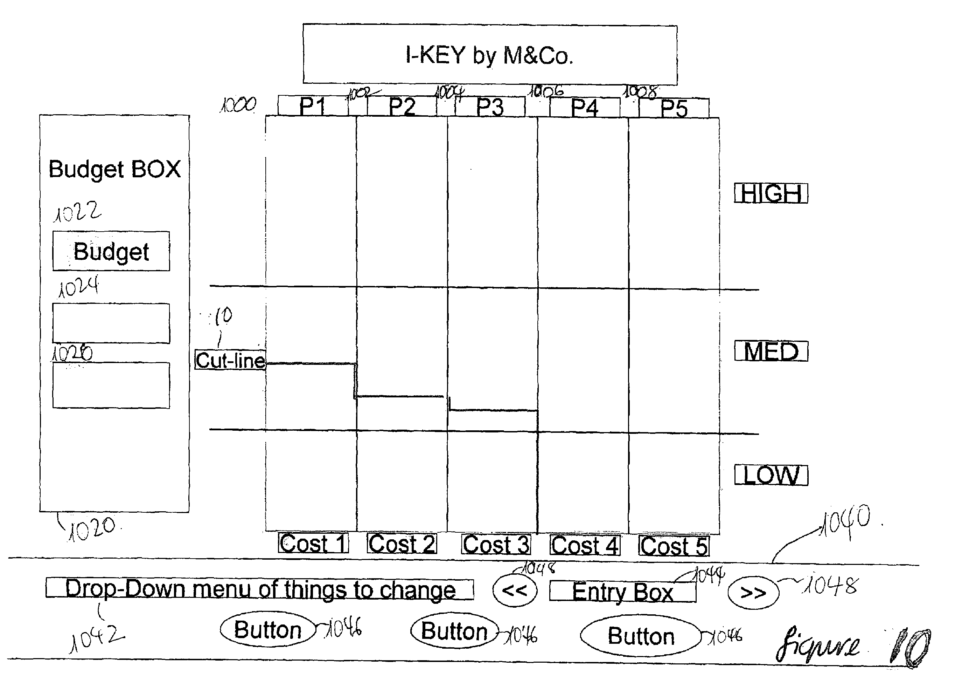

Having identified the values of a, b and c a kill or cut line 930 is then generated. Everything below the line will be killed in order to achieve budgetary balance. Referring to figure 10, this will be displayed on a computer screen for the user as will be described in greater detail below.

The above described methodology and algorithm are shown by way of example and it will be clear that there may be many variations of how costs are calculated and compared with budget. However one of the important facts is that each case is evaluated and its relative importance is known. This means that the automatically generated cut-line is going to be reliable in respect of the determining which cases should be cut form the portfolio if cuts are needed.

In other embodiment of the invention all the costs of all the cases (new filings, new cases, pending and granted cases of whatever) are used to work out what budget is required. This can be done by adding up all the estimated costs for all the cases based on the cost estimates tool described in figure 7.

In the above examples P5 is shown as an empty sub-portfolio, but this need not be so. In addition, the P5 sub-portfolio may be used for a new technology area if the user starts to carry out research and development here. Also it should be noted that any number of portfolios which may exist as is appropriate to the user.

Referring now to figure 10 a representation of a screen shot is shown. This screen shot is one of the main screens of the tool that can be used by the user to navigate around the various functions of the tool. The screen shot shows the sub-portfolios P1-P5 (1000, 1002, 1004, 1006, and 1008) and the costs for each sub-portfolio. For each area of the portfolio (i.e. P1 low; P3 med etc) a count of the number of cases may be shown. The rankings high, med, low are also be shown. The cut line 1010 (or kill-line) calculated earlier is also shown. In addition the screen-shot may include a budget box 1020, which can be used to input the budget, adjust the budget to determine consequences to the portfolio and generate a budget estimate. The budget box may include data input fields (1022, 1024 and 1026) and means for obtaining data from user inputs or other sources. There may be drop down menu or any other appropriate means for the required functions within definition, management, or control of the budget. By adjusting the budget levels the cut line will move. This is a useful tool to show how much budget is required and what the consequences of budget cuts are. As the persons skilled in the art will know these are things that regularly happen.

The screen shot also includes a data entry section 1040 with drop down menus 1042, data entry fields 1044, buttons 1046, up and down value changers 1048 etc. This can be used by the user to change various parameters of the portfolio. For example the importance or a portfolio may change. The drop down menu 1042 is then set to this and changes fare made in the entry box 1044.

In addition changes may also be made to any other aspects of the criteria stored in respect of the cases and the cases in the portfolio may thus be reorganised and re-categorised. This ensures that changes to the environment and business strategy of the user can quickly be applied to the portfolio.

The portfolio management tool identified above effectively has a number of different modules. These art set out below as a summary of the elements:

The IP strategy module sets out the business strategy and determines the synergies between the business and IP strategies which are important to the user or owner of the portfolio. This identifies the criteria which are important to the user and sets out a framework which is adapted to suit the user in terms of the management of the portfolio as a whole. These criteria are used extensively in the following modules.

The IP information and review module sets out the practical steps which are required in capturing and reviewing a new invention (or other asset). This includes capturing all relevant information and storing this. Also the review determines which cases in the portfolio are more or less important with respect to the others, thereby ranking the cases relative to one another. This ranking is in respect of every criterion and thus allows huge flexibility in terms of revising the positions of each case should the business or IP strategies change.

The IP cost estimates module which determines an estimate of cost for each asset in each year of its life. For a patent or trademark this may be the cost for a given country a given number of years from the priority date. The costs may be estimated using the figure 7 type chart or may be determined or entered into the tool in any other appropriate manner.

The budget-cost evaluation module which compares cost and budget in order to manage the budgetary issues associated with the portfolio. In the circumstances where there is a mismatch between costs and budget this module enables cuts to the portfolio to be automatically be made if the user requests.

Each of these modules can be used apart or together depending on user needs. However the basic principle of multiple categorisations by multiple criteria which depends on business inputs and is adaptable to changes in this is the key to the invention.

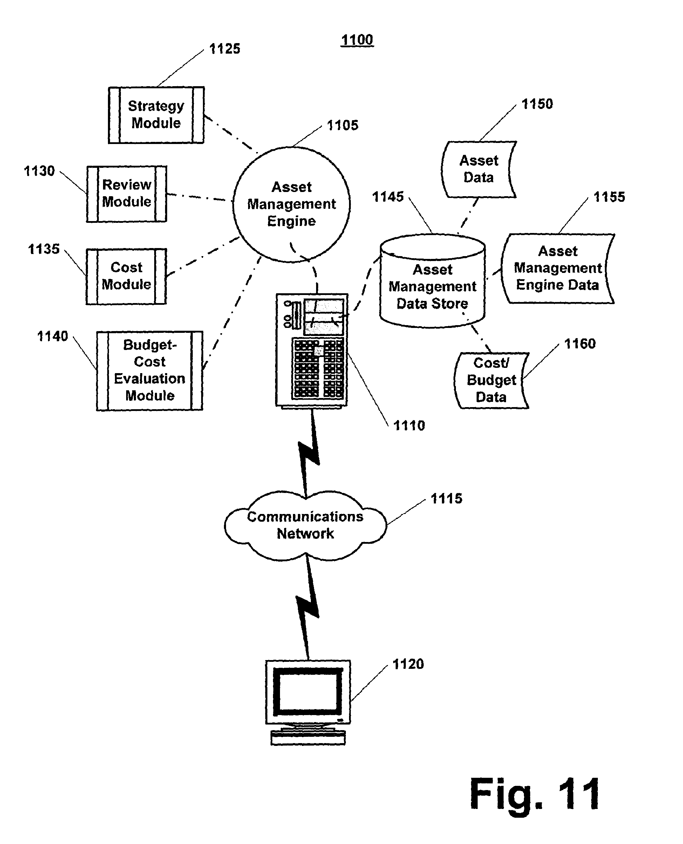

Figure 11 shows a block diagram of an illustrative implementation of the systems and methods as deployed in a computing environment. As is shown in Figure 11, asset management environment 1100 can comprise server computing environment 1110, communications network 1115, client computing environment 1120, and asset management data store 1145. Further, as is shown, server computing environment 1110 can operate one or more computing applications including but not limited to asset management engine 1105. Asset management engine 1105 can comprise one or more processing modules including but not limited to strategy module 1125, review module 1130, cost evaluation module 1135, and budget-cost evaluation module 1140. Also, asset management data store 1145 can store various data including but not limited to asset data 1150, asset management engine data 1155, and cost/budget data 1160.

A participating user (not shown) can interface with client computing environment 1120 through a user interface (as described in Figure 10 - not shown in Figure 11) to input and retrieve various asset portfolio management data. In the illustrative operation, client computing environment 1120 can communicate a request for data and/or to process inputted data over communications network 1115 to server computing environment 1110. Responsive to the request for data and/or to process data, server computing environment 1110 can execute one or more process modules (e.g., 1125, 1130, 1135, and/or 1140) of asset management engine 1105. Additionally server computing environment 1110 can cooperate with asset management data store 1145 to respond to the request for data and/or process data received from client computing environment 1120.

It is appreciated that although illustrative asset management environment 1100 is described having specific processing modules and storing/retrieving specific data that such description is merely illustrative as the herein described systems and methods can comprise various asset management processing modules and types of data. It is further appreciated that the illustrative asset management environment 1100 will now be described in connection with the management of intellectual property assets using specific processing modules. Such description is merely illustrative as the inventive concepts described in managing intellectual property assets can be used to manage non-intellectual property assets.

Strategy module 1125 can comprise an intellectual property (IP) strategy module that can operate to process data representative of the business strategy of an organisation, and comprise business logic to assist in the determination of the synergies between the business goals and selected IP strategies of the organisation. Such processing can leverage various computing algorithms and business logic including but not limited to data weighting algorithms, data affinity type algorithms, and data pattern matching algorithms.

Strategy module 1125 can be used to identify the criteria that are important to the organisation and can be used to establish a framework that can be adapted to meet the needs of the organisation for use in asset portfolio management efforts. Additionally, the criteria that are developed with by strategy module 1125 can be used by other cooperating processing modules. The criteria can be stored by asset management engine 1105 in cooperating data store 1145 as asset data 1150 and/or asset management engine data 1155.

Review module 1130 can comprise an IP information and review module that can operate to define the steps that can be required in capturing and reviewing a new invention (or other asset). Additionally, review module 1130 can be used to capture all of the relevant information for use when reviewing a new asset. Review module 1130 can operate to associate a rank for the assets (new and existing) to determine a relative importance of the asset within the portfolio. Review module 1130 can determine the rank using the criteria developed by strategy module 1125. The rank information can be subsequently used by cost module 1135 and can change depending on whether one or more portfolio criteria (produced by strategy module 1125) changes. The resultant review data produced by review module 1130 can be stored by asset management engine 1105 in cooperating data store 1145 as asset data 1150 and/or asset management engine data 1155.

Cost module 1135 can comprise an IP cost estimates module that can operate to determine an estimate of cost for each asset during selected time periods of each asset's lifespan. In the illustrative implementation, for a patent or trademark this can be the cost associated in procuring and/or maintaining the patent and/or trademark asset for a given country for a given number of years. In the illustrative implementation, the costs calculated by cost module 1135 can be calculated according to a methodology as shown in Figure 7 and described herein. Additionally, the costs can be calculated by cost module 1135 using inputted information from a participating user (not shown) communicated to asset management engine 1105 using client computing environment 1120 communicating data to server computing environment 1110 over communications network 1115.In the illustrative operation, the calculated cost data can be stored by asset management engine 1105 in cooperating data store 1145 as cost/budget data 1160.

Budget-cost evaluation module 1140 can comprise an IP budget-cost evaluation module that can operate to compare asset budgets and asset costs in an effort to ensure that asset costs do not overrun asset budgets. In the event that asset costs overrun asset budgets, budget-costs evaluation module can process asset cost data, asset ranking information, and asset portfolio criteria to make a recommendation of which assets should be cut from the asset portfolio so as to achieve the selected and determined IP strategy as developed with the assistance of the IP strategy module.

Budget-cost evaluation module 1140 can cooperate with the other processing modules of asset management engine to automatically remove assets from the asset portfolio depending on selected budget/cost parameters. In this context, asset management data engine 1105 can operate to modify and/or delete data stored by asset management data store 1145 based on the processing results of budget-cost evaluation module 1140. Asset management engine 1105 can operate similarly based on processing results received from other processing modules including strategy module 1125 and review module 1130.

Processing modules 1125, 1130, 1135, and 1140 can operate independently or in cooperation with each other depending on the processing request.

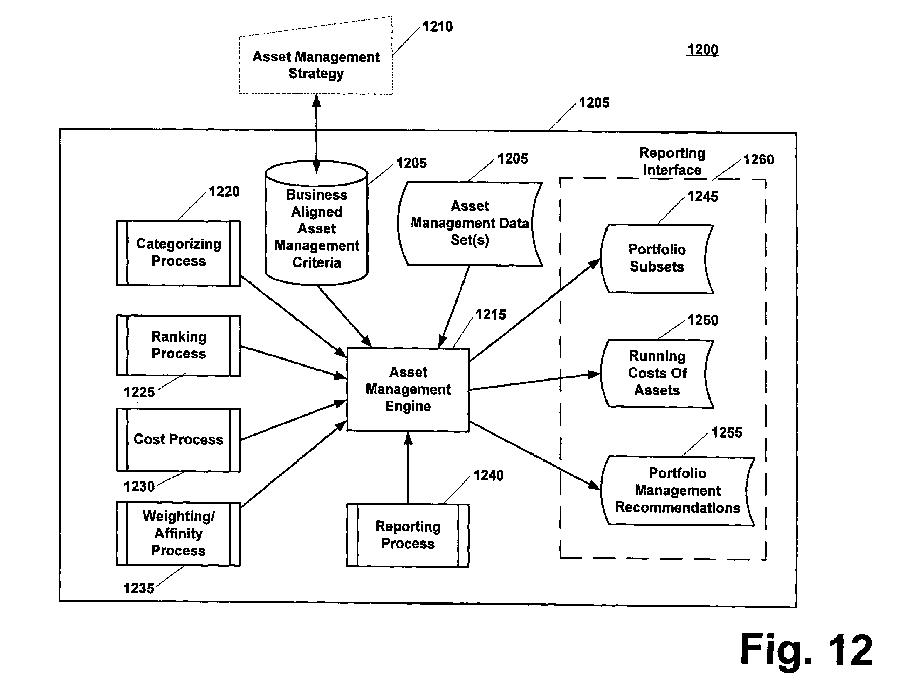

Figure 12 shows another implementation of an asset management environment 1200.As is shown, asset management environment 1200 comprises asset management processing environment 1205 that can cooperate with asset management strategy data 1210. Further, as is shown in Figure 12, asset management processing environment 1205 comprises asset management engine 1225, business aligned asset management criteria data store 1215, asset data set(s) 1220, categorizing process 1230, ranking process 1235, cost process 1240, weighting/affinity process 1245, reporting process 1250, reporting interface 1270 that is capable of displaying for use and navigation of portfolio subset data 1255, running costs of assets data 1260, and portfolio management recommendation data 1265.

A secondary process(not shown)can be employed to create business aligned asset management criteria for use and storage in business aligned asset management criteria data store 1215. Such exemplary secondary process (not shown) can use asset management strategy data 1210 as input to create the business aligned asset management criteria. In the illustrative operation, the asset management strategy data can be provided by the management of an organization that can be aligned with an organization's strategic plan.

Further, asset management engine 1225 can receive asset data set(s) 1220 as input along with business aligned asset management criteria 1215 and perform one or more processes on the input data as part of asset management. Such processes can operate on the asset data sets(s) 1220 using business aligned asset management criteria as guidelines for the processes applied to the asset data sets(s) 1220 to generate one or more asset management output data sets (e.g., portfolio subsets 1225, running costs of assets data 1260, and portfolio management recommendations data 1265).

Categorizing process 1230 can operate to group assets represented in asset data set(s) 1220 according to one or more business aligned asset management criteria found in business aligned asset management criteria data store 1215 and to generate data that can be found in portfolio subsets data 1255. Ranking process 1235 can operate to provide an order (e.g., rank) for assets represented in asset data set(s) 1220 according to one or more business aligned asset management criteria found in business aligned asset management criteria data store 1215 to generate data that can be found in portfolio data subsets data 1255. Cost process 1240 can operate to aggregate cost information (e.g., over the lifetime of the asset - from procurement to disposition) for assets represented in asset data set(s) 1220 according to one or more business aligned asset management criteria found in business aligned asset management criteria data store 1215 to generate data that can be found in running costs of assets data 1255. Weighting/affinity process 1245 can operate to provide pattern matching and correlation for assets represented in asset data set(s) 1220 according to one or more business aligned asset management criteria found in business aligned asset management criteria data store 1215 to generate asset management recommendation data (e.g., based on the cost of a first asset to date, the relative rank of the asset to other assets, and the proximity of the asset to existing assets that can be found in portfolio management recommendations data 1265. Reporting process 1250 can operate to provide reporting data for assets represented in asset data set(s) 1220 according to one or more selected reporting formats (not shown) for use by reporting interface 1270 to display one or more of the output asset management data sets (e.g., e.g., portfolio subsets 1225, running costs of assets data 1260, and portfolio management recommendations data 1265).

Further, reporting interface 1270 can comprise a computing environment (not shown) having an interactive graphical user interface (not shown) for use in displaying and interacting with asset management output data 1255, 1260, and 1265. Additionally, reporting interface 1270 can be used to accept input from participating users (not shown) for use by asset management engine 1250 including business aligned asset management criteria, asset management strategy 1210 and budget data (not shown).

It is understood that the herein described systems and methods are susceptible to various modifications and alternative constructions. There is no intention to limit the invention to the specific constructions described herein. On the contrary, the herein described systems and methods are intended to cover all modifications, alternative constructions, and equivalents falling within the scope and spirit of the invention.

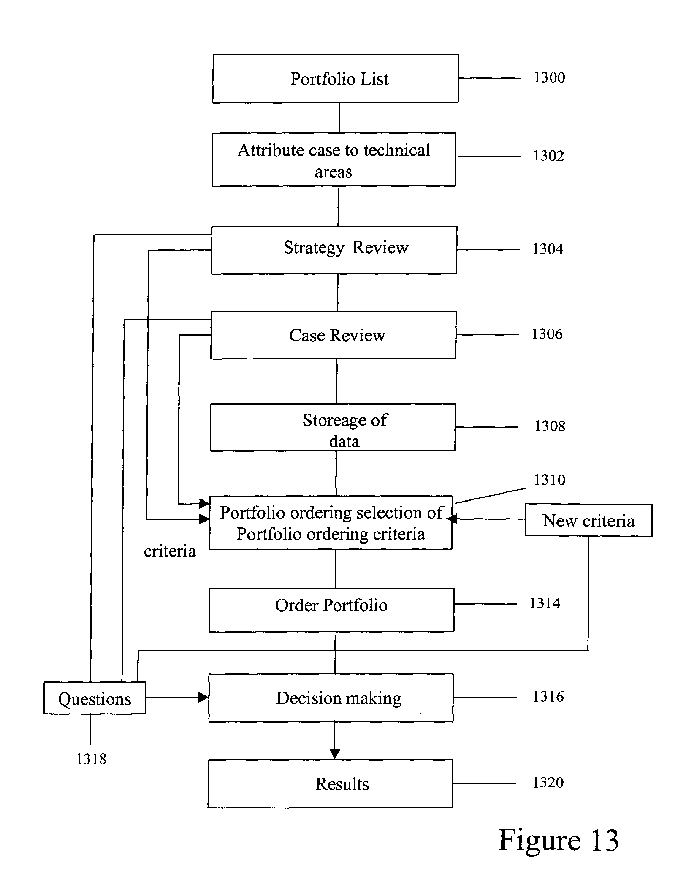

An example portfolio is now briefly described with reference to the flow chart of figure 13. A patent portfolio of 600 patents from 350 patent families are determined and entered into the data base of the present invention 1300. A patent family as previously indicated is a number of patents in different countries which relate to the same invention.

The 600 patents are analysed to determine the technology area to which they should be attributed step 1302.

For each technology portfolio there will be a number of the cases from the portfolio. For example if there are 5 technology portfolios the numbers of cases in each portfolio could be Portfolio 1; 198 : Portfolio 2; 62 : Portfolio 3 ; 133 : Portfolio 4; 97 and Portfolio 5; 110.

A strategy review is carried out to determine details of the business needs of the owner of the patent portfolio in question. This gives information which is used to determine what types of parameters will be analysed, stored and used in future steps of the process step 1304.

Once the cases are attributed to each technology portfolio and preferably after strategy review a review of each case in each technology portfolio is carried out. Step 1306.

The case review will determine scores, rankings or other criteria or parameters for each case to enable a comparison with all other cases in a given technology portfolio. In this way the relative importance of all cases in each technology portfolio is identified. It is possible that several cases may have the same relative position with respect to some criteria but not with respect to others.

The data that has been determined during the case review is stored in a database step 1308. A portfolio ordering criteria is selected (step 1310) where the list of possible criteria may be derived from the strategy review, the case review, the case data or other new criteria (1312), for example annual costs, etc.

The portfolio may then be sorted in accordance with selected criteria or parameters. The sorted portfolio may be used to respond to enquiries question or the like and to make or assist in decisions relating to the portfolio and management thereof.

Earlier details in this specification give examples of the various detail relating to the steps, cases, decisions to be made etc for this flow chart.

It should also be noted that the herein described systems and methods may be implemented in a variety of computer environments (including both non-wireless and wireless computer environments), partial computing environments, and real world environments. The various techniques described herein may be implemented in hardware or software, or a combination of both. Preferably, the techniques are implemented in computing environments maintaining programmable computers that include a processor, a storage medium readable by the processor (including volatile and non-volatile memory and/or storage elements), at least one input device, and at least one output device. Computing hardware logic cooperating with various instructions sets are applied to data to perform the functions described above and to generate output information. The output information is applied to one or more output devices. Programs used by the exemplary computing hardware may be preferably implemented in various programming languages, including high level procedural or object oriented programming language to communicate with a computer system. Illustratively the herein described apparatus and methods may be implemented in assembly or machine language, if desired. In any case, the language may be a compiled or interpreted language. Each such computer program is preferably stored on a storage medium or device (e.g., ROM or magnetic disk) that is readable by a general or special purpose programmable computer for configuring and operating the computer when the storage medium or device is read by the computer to perform the procedures described above. The apparatus may also be considered to be implemented as a computer-readable storage medium, configured with a computer program, where the storage medium so configured causes a computer to operate in a specific and predefined manner.

Although an exemplary implementation of the herein described systems and methods has been described in detail above, those skilled in the art will readily appreciate that many additional modifications are possible in the exemplary embodiments without materially departing from the novel teachings and advantages of the invention. Accordingly, these and all such modifications are intended to be included within the scope of this invention. The invention may be better defined by the following exemplary claims.

**Claims**

1. A method of managing a portfolio of assets in order to take action in respect of the portfolio which comply with one or more requirement determined by a user, the method comprising the steps of:

    - defining one or more requirements which align with the needs of the user;
    - defining a number of criteria associated with the requirements wherein each criterion is associated with one of a plurality of indicators which are indicative of the relative importance of that criterion in respect of the requirement;
    - identifying the assets in the portfolio and determining for each the criteria which are relevant to that asset and the relevant indicators for that asset in respect of each criterion;
    - ordering the assets in accordance with the indicators in respect of at least two of the criteria such that the assets with common indicators in respect of both criteria are grouped together into portfolio sections thereby identifying the degree to which the assets which are aligned with the requirements;
    - determining what actions are required to change in respect of the portfolio sections to meet the requirements.

2. The method of claim 1, further comprising determining the requirements by determining what the or each asset may be used for.

3. The method of claim 1 or claim 2, further comprising determining the requirements from a strategy for using and managing the assets.

4. The method of claim 2 or claim 3, wherein the step of determining comprises identifying the preferred requirements of the user in respect of the assets as a whole;
determining which criteria have the greatest influence on the preferred requirements;
selecting two of the criteria which have the greatest influence as the at least two criteria.

5. The method of any preceding claim, further comprising determining the indicators as numerical values and carrying out mathematical operations to order the assets.

6. The method of claim 5, further comprising using the numerical values to determine a group of assets which meet a certain requirement.

7. The method of any preceding claim, further comprising:

    - estimating the expected cost for each asset in a predetermined time period;
    - determining the available budget for the predetermined time period;
    - comparing the expected cost and the available budget to determine a difference;
    - if there is insufficient budget for the period analysing the portfolio sections to determine the degree to which the difference is attributed to each portfolio section;
    - marking assets in each portfolio section which have the lowest indicators in respect of one of the criterion to be cut from the portfolio in accordance with the degree to which the difference is attributed to that portfolio section, and the cost of that asset, until all the difference attributed to that portfolio section has been accounted for.

8. The method of any preceding claim, further comprising:-

    - reviewing each asset on a regular time base to change the criteria and associated indicators as necessary to ensure changes in the assets' relative value are identified.

9. The method of any preceding claim, further comprising:

- reviewing the requirements on a regular time base to identify changes in user requirements.

10. A system for managing a portfolio of assets in order to take action in respect of the portfolio which comply with a requirement determined by a user, the method comprising:-

- requirements determination and capturing means for determining and capturing one or more requirements which align with the needs of the user;
- requirements analysis means for determining a number of criteria associated with the requirements wherein each criterion is associated with one of a plurality of indicators which are indicative of the relative importance of that criterion in respect of the requirement;
- asset analysis means for identifying the assets in the portfolio and determining for each the criteria which are relevant to that asset and the relevant indicators for that asset in respect of each criterion;
- ordering means for ordering the assets in accordance with the indicators in respect of at least two of the criteria such that the assets with common indicators in respect of both criteria are grouped together into portfolio sections thereby identifying the degree to which the assets are aligned with the requirements;
- actioning means for determining what actions to change are required in respect of the portfolio sections to meet the requirements.

11. A system for managing an asset portfolio comprising:

an asset management engine; and
an asset management instruction set providing instructions to the asset management engine to receive asset management data for process according to a selected asset management paradigm,

wherein the asset management paradigm uses one or more asset management portfolio criteria as part of one or more processes to generate output data for us in asset management.

12. The system of claim 11, wherein the asset management engine comprises a computing application operating in a computing environment and the assets are represented as one or more data sets.

13. The system of claim 12, further comprising a user interface operable to input and display asset management data.

14. The system of claim 13, wherein the user interface comprises one or more controls that allow for the operation of one or more processes executed by the asset management engine in accordance with the asset management instruction set.

15. The system of claim 14, wherein the asset management engine comprises one or more processing modules operable to perform one or more processes comprising: categorizing the data sets representative of assets to generate asset data subsets, ranking data items in each of the data subsets according to one or more selected criteria, applying cost information to the one or more data items of the data subsets to generate running cost information, applying one or more weighting/affinity algorithms to one or more data items of the one or more data sets according to one or more selected criteria to identify data patterns, and generating reports having data representative of the asset data subsets, cost information, and data patterns.

16. The system of claim 15, wherein the processing module applies one or more weighting/affinity algorithms to one or more data items of the one or more data sets according to one or more selected criteria to generate decision trees for use in asset management.

17. The system of claim 15, wherein the reports are displayed on the user interface.

figure 1

EP 1 775 678 A1

| Budget | Key IP identification | Technology | Review use of IP | Type of use | Types of IP | Competitors | Customers | How owner uses IP |
|---|---|---|---|---|---|---|---|---|
| Size | Which cases | Type | Yes | Manufacture | Patents | Who | Who | Own use |
| Fixed | Treated differently | Fixed for variable | No | Product | Trademarks | Where | Where | Licensing |
| Competitive | How identified | Standard orientated | What profit services | Service | Trade secret | Relationship | Influence on owner | Litigation |
| How determined | Review process | Products | Government related | Owners role | Detect ability | Market shared of owner and competitors now | Influence on filing strategy | Strategy |
| Who determines | How are they cared | Services | Customer client related | Where | Copyright | | Size | Influence |

**FIGURE 2**

20

# High level management questionnaire

1) Budget for R&D - € X

2) Percentage of R&D for IP protection – Y%

3) IP budget

4) Optional competitor information :

    1) Budget for R&D.

    2) R&D Budget

    3) % of R&D budget for IP Protection         Ditto other Competitors

5) List of current Technology sub-groups

6) Ranking of Technology sub-groups i.e. relative importance ( H, M, L or 1,2,3,4,5,etc)

7) What do you want to do with the IP Portfolio

    1) Use it to protect own products services only

    2) Licence it to others

    3) Cross licence with others

    4) Use it aggressively

    5) File it

    6) Use it to generate funding

    7) Open up IP to all for no cost.

    8) Publish it

8) Major impact countries : list of main countries for client, competitors and customers)

9) Ranking of major impact countries.

10) If you have to chose a most important criteria for the portfolio, what would it be?

    1) Technology

    2) Uses of IP

    3) Countries

    4) Please rank these HML if possible

**Figure 3**

# Case time line

**Figure 4**

EP 1 775 678 A1

# <u>New Invention Form</u>

## Information to be captured (Note book and new invention form) :

1. **Title of Invention** — 500

2. **Technical information including :** — 502

    a.      Technical field — 504

    b.      Prior Art — 506

    c.      Technical details including drawings and flow charts as appropriate — 508

**Figure 5 a**

23

**3.** **Commercial considerations** — 510

   a.    Product/service in which invention resides

   b.    Technology Portfolio (select from list or other if new — 512
           portfolio)

   c.    Standards applicability — 514

| Yes ☐ | No ☐ | Identify if possible |
| --- | --- | --- |

   d.    Ease of identification in product /services of — 518
competitors

**Figure 5 b**

e.  Relevance to customers ⟋ 520

| |
|---|
| Yes ☐        No ☐      Identify |

f.  Relevance to competitors ⟋ 522

| |
|---|
| Yes ☐        No ☐      Identify |

g.  Type of invention : ⟋ 524

-  Broad field        ☐

-  Improvement       ☐

-  Minor invention    ☐

h.  Expected technology Portfolio rank (HML) ⟋ 526

-  H        ☐

-  M        ☐

-  L        ☐

**Figure 5 c**

i.   Expected position in Technology Portfolio (HML)   ⟋ 528

-   H   ☐

-   M   ☐

-   L   ☐

j.   Expected key IP

⟋ 530

Yes ☐       No ☐

Review date :

k.   Inventor's commercial score   ⟋ 532

-   H

-   M   ☐

-   L   ☐

☐

⟋ 534

Insert
date :   [                    ]

**Figure 5 d**

4.　　　　　**Inventors :**　　　　　— 536

a.　　　Full names　　　— 538

```



```

b.　　　Address (Home)　　　— 540

```



```

c.　　　Contact details　　　— 542

```



```

d.　　　Employee details (if applicable)　　　— 544

```



```

**Figure 5 e**

546

e.      If inventors are not employees check invention ownership issues.

f.      Employee departmental details

g.      Other information depending on individual requirements

548

**Figure 5 f**

# Invention Assessment Form

Ensure all details on New Invention Form are complete:

- if not complete!

List of people you must include at a Invention Review include:

1. Technical reviewer (not inventor)

2. Commercial reviewer (marketing, product manager, etc)

3. IP specialist (if possible main task to facilitate)

Determine the following about the invention :

Has Invention Identified Form been completed ? If no complete
all remaining details.

Review of Invention to determine relative value within the IP Portfolio.

**Figure 6 a**

YES = 3

POSSIBLE = 2

NO = 1

600

602

604

606

608

Broad Field = 3

Improvement = 2

Minor Tech.
Contribution = 3

610

Broad Field = 3

Improvement = 2

Minor
invention = 3

612

| | YES | POSSIBLE | NO |
|---|---|---|---|
| **1. COMMERCIAL** | | | |
| a. In products/services | | | |
| details : | | | |
| b. Competitor product likelihood | | | |
| details : | | | |
| c. Customer product likelihood | | | |
| details : | | | |
| d. Standards relevant | | | |
| details : | | | |
| e. Ability to detect claimed invention | | | |
| **Total Commercial mark :** | | | |

| | Broad field invention | Improvement | Minor Tech. contribution |
|---|---|---|---|
| **TECHNICAL** | | | |
| a. Type of technology | | | |
| | H | M | L |
| b. Technology Portfolio | | | |
| **Total Technical mark :** | | | |

| | Broad field invention | Improvement | Minor invention |
|---|---|---|---|
| **INVENTIVE FEATURES** | | | |
| Type of invention | | | |
| **Total Inventive mark :** | | | |

**Figure 6 b**

614

**TOTAL MARK X/24:**

**X = Commercial + Technical + Inventive**

Filing threshold : TBD by client

-recommend X = 12 or more

616

Foreign filing threshold TBD by client

-recommend X = 16 – 18

-N.B : different thresholds for different
countries can be set.

## **Decision :** 618

**Final Score $\underline{X}$**

| | |
|---|---|
| **X ≤ Threshold** of patent specification | File – Case proceeds to Patent Attorney for preparation |
| **X > Threshold** | No file – Case is closed (include reason) |
| X = Anything to relevant staff | Keep as trade secret – Ensure appropriate communication |
| X = Anything of decision | Effect a defensive publication –Draft and submit in 3 months |
| X = Anything | Refer for specific reason (cases cannot be referred more than twice – 3 referrals = close case) |

**Figure 6 c**

Year          Annual Total Cost

## Typical Case (via PCT)

| First filing |
→ 1

| PCT filing | 12 months
→

| Publication | 18 months

| Exam |

| National phase |
→ 2

| US | | EP | | JP | | CN | | CA | | AU |
→ 3

| OA 1 | | Ren | | Exam | | OA 1 | | OA 1 | | OA 1 |
→ 4

| OA 2 | | Ren OA1 | | OA 1 | | OA 2 | | OA 2 | | OA 2 |
→ 5

| OA 2 | | Ren | | Ren | | Ren | | Ren |
→ 6

( 7¹ᐟ² )  | Grant | | Ren | | Ren | | Ren | | Ren |
7

| Ren | | Ren | | Ren | | Ren |
8

GB    BE    FR    DE    IT    GB    FI
9

| REN | | REN | | REN | | REN | | REN | | REN | | REN |

10

as    9

( 11¹ᐟ² )
11

12

13

**Figure 7**
14

EP 1 775 678 A1

816

818

814 →

| P1 | P2 | P3 | P4 | P5 |
|---|---|---|---|---|
| US4567<br>US3456 | US6789CIP2<br>US6789CIP2<br>CA6789<br>US6789 | FR9012<br>GB9012<br>CA9012<br>US9012 | US1379<br>DE1379 | |
| US2345<br>DE2345<br>US1234 | DE6789<br>FI6789<br>FR6789<br>UK6789 | US8901<br>US7890<br>TW7890<br>CN7890 | FR1379<br>GB1379<br>US2468<br>CN2468 | |
| FR1234<br>UK1234<br>TW1234 | US5678<br>DE5678<br>FR5678<br>UK5678 | UK7890<br>DE7890<br>FR7890 | FR2468<br>GB2468<br>DE2468 | |

812 →

810 →

P1    P2    P3    P4    P5

800    802    804    806    808

Figure 8

Figure 9

EP 1 775 678 A1

I-KEY by M&Co.

Budget BOX
1022

Budget
1024

1026

1020

1000  P1 | 1002  P2 | 1004  P3 | 1006  P4 | 1008  P5

HIGH

MED

LOW

(0

Cut-line

Cost 1 | Cost 2 | Cost 3 | Cost 4 | Cost 5

1040

Drop-Down menu of things to change   <<   Entry Box   >>  1048

1042

Button 1046   Button 1046   Button 1046

figure 10

EP 1 775 678 A1

35

1125

1100

Strategy
Module

1105

1150

Asset
Data

1130

Review
Module

Asset
Management
Engine

1145

1155

1135

Cost
Module

Asset
Management
Data Store

Asset
Management
Engine Data

1140

Budget-
Cost
Evaluation
Module

1160

Cost/
Budget
Data

1110

1115

Communications
Network

1120

## Fig. 11

Fig. 12

EP 1 775 678 A1

Figure 13

**European Patent**
**Office**

**DECLARATION**

Application Number

which under Rule 45 of the European Patent Convention EP 05 36 8017
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims<br><br>Reason:<br><br>The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.<br>The problems which are addressed do not appear to require a technical, but rather an administrative/organisational, or business, solution. The implementation of this solution may include the use of generic technical features, however these do not interact to solve any overall technical problem but merely serve their well-known functions.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>----- | **CLASSIFICATION OF THE APPLICATION (IPC)**<br><br>INV.<br>G06Q10/00 |
|---|---|
| Place of search<br><br>Munich | Date<br><br>25 April 2006 | Examiner<br><br>Peller, I |

EPO FORM 1504 (P04C37)